# EUROPEAN PATENT APPLICATION

(11) **EP 4 001 110 A1**
(43) Date of publication of application: **25.05.2022**
(21) Application number: 20843287.2
(22) Date of filing: 26.05.2020
(51) Int. Cl.: B64C 39/02, B64D 27/24, G08G 5/04, B64F 1/36

(54) **INFORMATION PROCESSING DEVICE, INFORMATION PROCESSING METHOD, AND PROGRAM**

(30) Priority: 19.07.2019 JP 2019133570
(71) Applicant: Sony Group Corporation, Tokyo 108-0075 (JP)
(72) Inventor: KASHIMA, Koso, Tokyo 108-0075 (JP)
(74) Representative: MFG Patentanwälte Meyer-Wildhagen Meggle-Freund Gerhard PartG mbB
(86) International application number: PCT/JP2020/020737
(87) International publication number: WO 2021/014747

(57) **Abstract**

[Object] To provide an information processing apparatus, an information processing method, and a program that prevent some aircraft from being excessively delayed as much as possible in a case of avoiding a conflict between movable objects.

[Solving Means] An information processing apparatus according to the present technology includes a control unit. The control unit predicts a movement path of a first movable object on the basis of a movement plan for which an allowable delay time is set, and determines whether or not a conflict will occur between the predicted movement path and a movement path of a second movable object.

## Description

### Technical Field

The present technology relates to an information processing apparatus, an information processing method, and a program.

### Background Art

Conventionally, there has been proposed utilizing a system including a plurality of movable objects, for example, for aerial shooting of landscapes, etc., remote security patrol, or the like. A technology that avoids a conflict (abnormal approach) between movable objects is employed in such a system (e.g., Patent Literature 1).

### Citation List

### Patent Literature

Patent Literature 1: Japanese Patent Application Laid-open No. 2014-029661

### Disclosure of Invention

### Technical Problem

However, in the system including the plurality of movable objects, some aircraft can be excessively delayed from scheduled times of the original flight plans due to avoiding a conflict between movable objects.

In view of this, in the present disclosure, proposed are an information processing apparatus, an information processing method, and a program that prevent some aircraft from being excessively delayed as much as possible in a case of avoiding a conflict between movable objects.

### Solution to Problem

In order to solve the above-mentioned problem, an information processing apparatus according to an embodiment of the present technology includes a control unit.

The control unit
predicts a movement path of a first movable object on the basis of a movement plan for which an allowable delay time is set, and
determines whether or not a conflict will occur between the predicted movement path and a movement path of a second movable object.

The movement path of the second movable object may be a movement path predicted on the basis of the movement plan of the second movable object.

The movement plan of the second movable object may include information about an allowable delay time set for the second movable object.

The control unit may determine a movable object that avoids the conflict on the basis of a registration order when the movement plans of the first and second movable objects have been registered in the information processing apparatus and the allowable delay time, and instruct the determined movable object to avoid the conflict.

The control unit may instruct one of the first and second movable objects, the movement plan of which has been registered in the information processing apparatus after the other, to avoid the conflict.

The control unit may determine whether or not the allowable delay time is feasible with respect to the first movable object on the basis of a remaining amount of power of the first movable object.

The control unit may
predict a delay time in a case where the first movable object avoids the conflict, and
change the movement plan of the first movable object in a case where the predicted delay time exceeds the allowable delay time.

The control unit may determine whether or not a conflict will occur between the first movable object in motion and the second movable object in motion.

The control unit may
predict a delay time in a case where the first movable object avoids the conflict, and
instruct the second movable object in motion to avoid the conflict in a case where the predicted delay time exceeds the allowable delay time.

At least one of the first movable object or the second movable object may be a flying object.

The information processing apparatus may be a server.

In order to solve the above-mentioned problem, an information processing apparatus according to an embodiment of the present technology includes a control unit.

The control unit that
acquires a movement plan of each of a plurality of movable objects,
predicts a delay time in a case of avoiding a conflict between the plurality of movable objects with respect to each of the plurality of movable objects,
determines, with respect to each of the plurality of movable objects, whether or not the predicted delay time of which is shorter than an allowable delay time, and
determines a priority order for avoiding the conflict so as to give priority to the movable object the predicted delay time of which is equal to or longer than the allowable delay time over the movable object the predicted delay time of which is shorter than the allowable delay time.

In order to solve the above-mentioned problem, an information processing method for an information processing apparatus according to an embodiment of the present technology includes
predicting a movement path of a first movable object on the basis of a movement plan for which an allowable delay time is set.
Whether or not a conflict will occur between the predicted movement path and a movement path of a second movable object is determined.

In order to solve the above-mentioned problem, a program according to an embodiment of the present technology causes an information processing apparatus to execute the following steps.

A step of predicting a movement path of a first movable object on the basis of a movement plan for which an allowable delay time is set.

A step of determining whether or not a conflict will occur between the predicted movement path and a movement path of a second movable object.

### Brief Description of Drawings

[Fig. 1] A schematic diagram showing a configuration example of an information processing system according to a first embodiment of the present technology.
[Fig. 2] A block diagram showing a configuration example of the information processing system.
[Fig. 3] A block diagram showing a hardware configuration example of an information processing apparatus, an external information apparatus, and an operation apparatus in the information processing system.
[Fig. 4] A flowchart showing a flow of a typical operation of the information processing system.
[Fig. 5] A diagram showing an example of a data table of a flight plan.
[Fig. 6] A conceptual diagram showing predicted trajectories of drone aircraft.
[Fig. 7] A diagram showing an example of a data table showing an update history of flight plans of the drone aircraft.
[Fig. 8] A flowchart showing one process of the operation of the information processing system.
[Fig. 9] A conceptual diagram showing trajectories of the drone aircraft in flight.
[Fig. 10] A flowchart showing a flow of a typical operation of an information processing system according to a second embodiment.
[Fig. 11] A flowchart showing one process of the operation of the information processing system.
[Fig. 12] A conceptual diagram showing a trajectory of each of the plurality of drone aircraft in flight.
[Fig. 13] A conceptual diagram showing a process of changing a priority order with respect to each of the plurality of drone aircraft.
[Fig. 14] A schematic diagram showing a configuration example of an information processing system according to a third embodiment of the present technology.
[Fig. 15] A block diagram showing a configuration example of the information processing system.
[Fig. 16] A flowchart showing a flow of a typical operation of the information processing system.
[Fig. 17] A flowchart showing one process of the operation of the information processing system.

### Mode(s) for Carrying Out the Invention

Hereinafter, embodiments of the present technology will be described with reference to the drawings.

### <First Embodiment>

### [Configuration of Information Processing System]

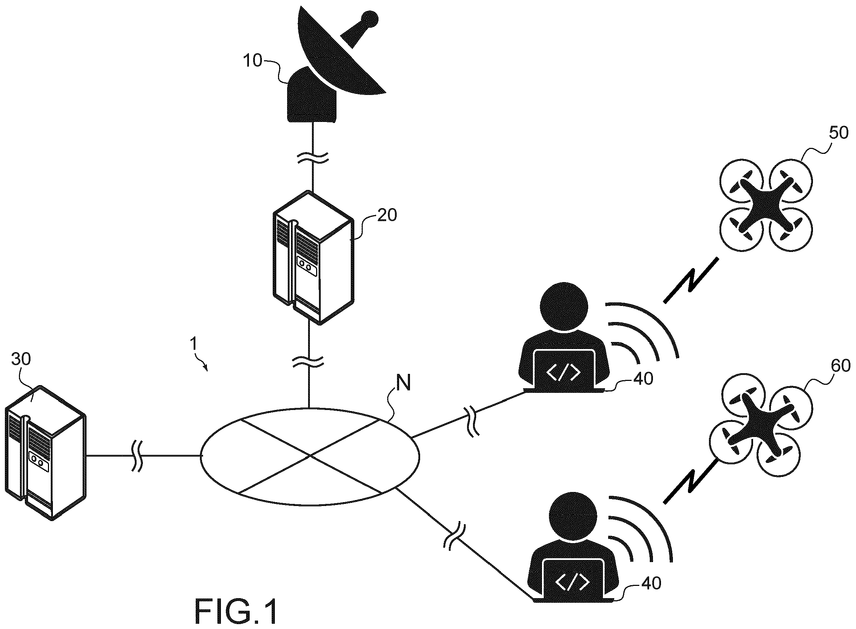

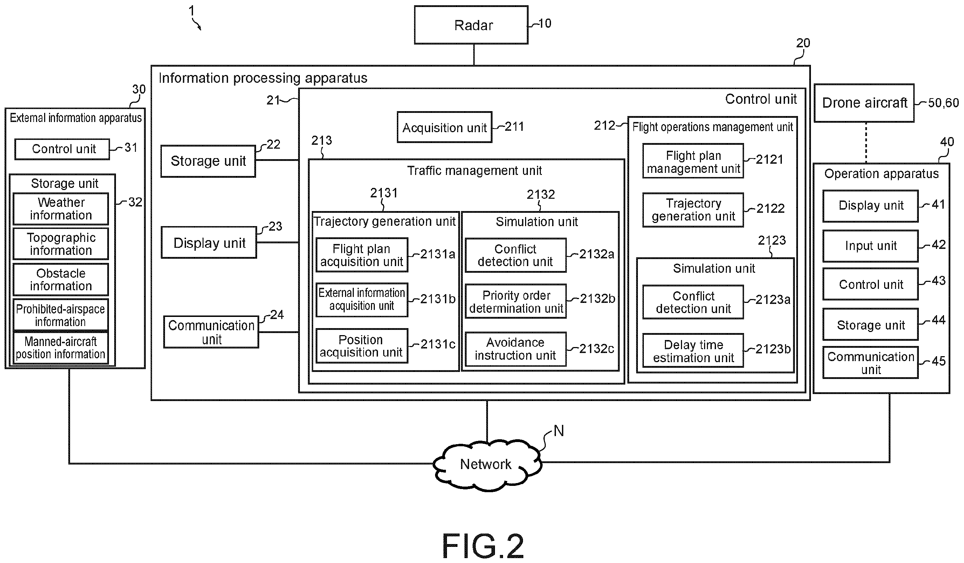

Fig. 1 is a schematic diagram showing a configuration example of an information processing system 1 according to a first embodiment. Fig. 2 is a block diagram showing a configuration example of the information processing system 1. The information processing system 1 includes, as shown in Fig. 1, a radar 10, an information processing apparatus 20, an external information apparatus 30, an operation apparatus 40, and drone aircraft 50 and 60.

The information processing apparatus 20, the external information apparatus 30, and the operation apparatus 40 are communicably connected to one another via a network N. The network N may be the Internet, a mobile communication network, a local area network, or the like or may be a network combining a plurality of types of networks of them.

### (Radar)

The radar 10 is a monitoring radar that detects the drone aircraft 50 and 60 in flight and measures positions of the drone aircraft 50 and 60 by utilizing reflection of radio waves. For example, the radar 10 emits radio waves toward the drone aircraft 50 and 60 and receives radio waves reflected by the targets or radio waves re-emitted by the targets, to thereby measure the positions of the drone aircraft 50 and 60 on the basis of round trip times of the radio waves and directions of the returning radio waves.

The radar 10 outputs position information of the drone aircraft 50 and 60, which is obtained by detecting the drone aircraft 50 and 60, to the information processing apparatus 20. The radar 10 may be, for example, air route surveillance radar (ARSR), airport surveillance radar (ASR), secondary surveillance radar (SSR), airport surface detection radar (ASDR), precision approach radar (PAR), or the like, and there are no limitations on the types.

### (Information Processing Apparatus)

The information processing apparatus 20 includes a control unit 21, a storage unit 22, a display unit 23, and a communication unit 24. The information processing apparatus 20 is typically a server apparatus, though not limited thereto. The information processing apparatus 20 may be any other computer such as a PC. Alternatively, the information processing apparatus 20 may be a control apparatus that controls flights of the drone aircraft 50 and 60 in order to perform safety and smooth flight operations of the drone aircraft 50 and 60.

The control unit 21 controls general operations of the information processing apparatus 20 or some of the general operations in accordance with programs stored in the storage unit 22. The control unit 21 has, as its functions, an acquisition unit 211, a flight operations management unit 212, and a traffic management unit 213.

The acquisition unit 211 acquires from the radar 10 the position information of the drone aircraft 50 and 60 in flight and outputs this position information to the traffic management unit 213.

The flight operations management unit 212 mainly coordinates a flight plan for a user that operates a drone aircraft 50 and performs registration and management of the coordinated flight plan.

As shown in Fig. 2, the flight operations management unit 212 includes a flight plan management unit 2121, a trajectory generation unit 2122, and a simulation unit 2123.

The flight plan management unit 2121 receives registration of flight plans from users who operate the drone aircraft 50 and 60. On the basis of a delay time calculated by a delay time estimation unit 2123b to be described later, the flight plan management unit 2121 coordinates the flight plans with the users who operate the drone aircraft 50 and 60, and registers the flight plans in the storage unit 22.

The trajectory generation unit 2122 generates predicted trajectories in the flight plans. The simulation unit 2123 includes a conflict detection unit 2123a and a delay time estimation unit 2123b. The trajectories correspond to "movement paths" in the scope of claims. It should be noted that the "trajectory" is a track represented by a set of latitude, longitude, and altitude and a time, and has a similar meaning also in the following descriptions.

The conflict detection unit 2123a determines whether or not a conflict will occur between the predicted trajectory of the drone aircraft 50 and the predicted trajectory of the drone aircraft 60. The delay time estimation unit 2123b calculates a delay time in a case of avoiding such a conflict. It should be noted that "avoiding the conflict" means, for example, processing in which the information processing apparatus 20 stops (e.g., hovering) the drone aircraft near an intersection point between the predicted trajectories or changes the velocity or processing of changing a setting position of a way point in a vertical direction and a horizontal direction, and has a similar meaning also in the following descriptions.

The traffic management unit 213 predicts future trajectories on the basis of the flight plans of the drone aircraft 50 and 60 and the trajectories during the flight, and predicts or avoids the conflict between the drone aircraft 50 and 60 in flight or manages the order of landing to an airdrome.

The traffic management unit 213 includes a trajectory generation unit 2131 and a simulation unit 2132.

As shown in Fig. 2, the trajectory generation unit 2131 includes a flight plan acquisition unit 2131a, an external information acquisition unit 2131b, and a position acquisition unit 2131c. The flight plan acquisition unit 2131a acquires a flight plan regarding each of the plurality of drone aircraft 50 in flight.

The external information acquisition unit 2131b acquires from the external information apparatus 30 environmental information including weather information, topographic information, obstacle information, prohibited-airspace information, and manned-aircraft position information. The position acquisition unit 2131c acquires position information about each of the plurality of drone aircraft 50 in flight.

On the basis of the position information and the flight plans regarding each of the drone aircraft 50 and 60 in flight and the environmental information acquired by the external information acquisition unit 2131b, the trajectory generation unit 2131 calculates trajectories in which the drone aircraft 50 and 60 have flown to current positions from departure airdromes, and predicts future trajectories of these aircraft.

The simulation unit 2132 includes a conflict detection unit 2132a, a priority order determination unit 2132b, and an avoidance instruction unit 2132c. Whether or not a conflict will occur between the drone aircraft 50 and 60 in flight is determined. Specifically, the conflict detection unit 2132a determines whether or not a conflict will occur between the predicted trajectories of the drone aircraft 50 and 60 in flight.

The priority order determination unit 2132b sets a priority order for the predicted trajectories of the respective drone aircraft 50 and 60 in flight. The simulation unit 2132 generates predicted trajectories again on the basis of the priority order, and determines a method of avoiding the conflict between the drone aircraft 50 and 60 in flight. The avoidance instruction unit 2132c outputs an instruction to avoid the conflict to the drone aircraft 50 or the drone aircraft 60 via the communication unit 24.

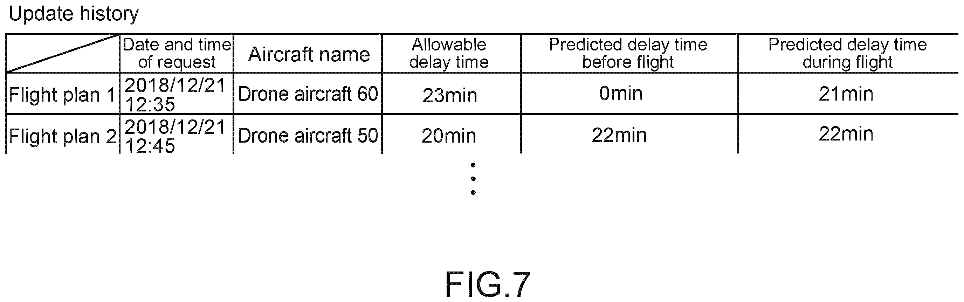

The storage unit 22 stores the flight plans of the drone aircraft 50 and 60 and an update history (Fig. 7) of these flight plans. The storage unit 22 stores results of computing of the delay time estimation unit 2123b and the conflict detection unit 2132a.

The display unit 23 is, for example, a display apparatus such as an LCD or an organic EL display. The display unit 23 displays results obtained by the processing of the information processing apparatus 20.

The communication unit 24 communicates with the external information apparatus 30 and the operation apparatus 40 via the network N. The communication unit 24 functions as a communication interface for the information processing apparatus 20.

### (External Information Apparatus)

The external information apparatus 30 includes a control unit 31 and a storage unit 32. The control unit 31 controls general operations of the external information apparatus 30 or some of the general operations in accordance with programs stored in the storage unit 32. The external information apparatus 30 is typically a server apparatus, though not limited thereto. The external information apparatus 30 may be any other computer such as a PC.

The storage unit 32 stores environmental information including weather information, topographic information, obstacle information, prohibited-airspace information, and manned-aircraft position information. Such information is output to the external information apparatus 30 from external information agencies and companies (not shown) and the like via the network N. Definitions of the weather information, the topographic information, the obstacle information, the prohibited-airspace information, and the manned-aircraft position information in this embodiment are as follows.

The weather information is information obtained from district meteorological observatories and private weather information companies. The weather information is, for example, information about a typhoon, information about a heavy rain, information about a record-breaking deluge in a short period, information about a low-pressure, information about a little rain, information about sea ice, information about a tide level, or the like.

The topographic information and the obstacle information are, for example, topographic data acquired from the Geospatial Information Authority of Japan, information obtained from an AW3D (registered trademark) global digital 3D map acquired from NTT data (registered trademark), or the like.

The prohibited-airspace information includes information indicating regions in which flights of movable objects such as aircraft are not allowed, which is acquired from the Geospatial Information Authority of Japan, information obtained from SORAPASS (registered trademark), information obtained a DJI (registered trademark) flight map, or the like.

The manned-aircraft position information is information indicating a manned-aircraft position that is acquired from the Air Traffic Management Center (ATM center).

### (Operation Apparatus)

The operation apparatus 40 includes a display unit 41, an input unit 42, a control unit 43, a storage unit 44, and a communication unit 45. The operation apparatus 40 is typically a laptop PC or a terminal apparatus such as a smartphone, though not limited thereto. The operation apparatus 40 may be an operation apparatus such as a controller.

The display unit 41 is, for example, a display apparatus such as an LCD and an organic EL display. The display unit 41 displays a video captured by a camera (not shown) mounted on the drone aircraft 50. Accordingly, the user can operate (manipulate) the drone aircraft 50 while watching the video displayed on the display unit 41.

The input unit 42 is an apparatus that the user operates, such as a keyboard and a mouse. The user operates the input unit 42 to thereby input various types of data into the operation apparatus 40 or instruct the operation apparatus 40 to perform a processing operation.

The control unit 43 controls general operations of the operation apparatus 40 or some of the general operations in accordance with programs stored in the storage unit 44.

The communication unit 45 communicates with the information processing apparatus 20 and the external information apparatus 30 via the network N. The communication unit 45 functions as a communication interface for the operation apparatus 40.

### (Drone Aircraft)

The drone aircraft 50 and 60 are flying objects that the user operates (manipulates) through the operation apparatus 40. The drone aircraft 50 and 60 are connected to the operation apparatus 40 by wireless communication. Communication standards for connecting the drone aircraft 50 and 60 to the operation apparatus 40 may be, for example, long term evolution (LTE) communication, Wi-Fi, or the like, and there are no limitations on the types.

The drone aircraft 50 and 60 may be, for example, fixed-wing aircraft or rotorcraft. In a case where the drone aircraft 50 and 60 are rotorcraft, the drone aircraft 50 and 60 may be, for example, tricopters, quadcopters, hexacopters, or octocopters and there are no limitations on the types. The drone aircraft 50 is an example of the "first movable object" in the scope of claims and the drone aircraft 60 is an example of the "second movable object".

### (Hardware Configuration)

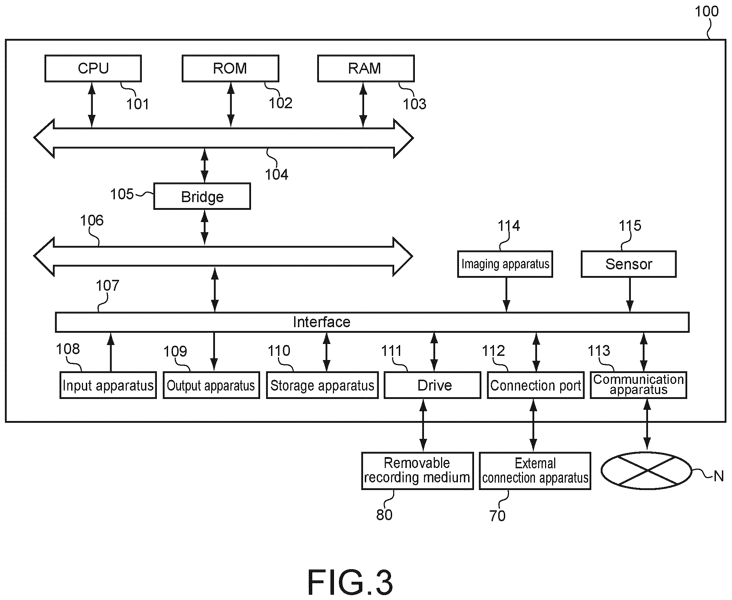

Fig. 3 is a block diagram showing a hardware configuration example of the information processing apparatus 20, the external information apparatus 30, and the operation apparatus 40. The information processing apparatus 20, the external information apparatus 30, and the operation apparatus 40 may be realized by an information processing apparatus 100 shown in Fig. 3.

The information processing apparatus 100 has a central processing unit (CPU) 101, a read only memory (ROM) 102, and a random access memory (RAM) 103. The control units 21, 31, and 43 may be the CPU 101.

The information processing apparatus 100 may be configured to have a host bus 104, a bridge 105, an external bus 106, an interface 107, an input apparatus 108, an output apparatus 109, a storage apparatus 110, a drive 111, a connection port 123, and a communication apparatus 113.

Moreover, the information processing apparatus 100 may be configured to have, depending on needs, an imaging apparatus 114 and a sensor 115. In addition, the information processing apparatus 100 may include, instead of or in addition to the CPU 101, a processing circuit such as a digital signal processor (DSP), an application specific integrated circuit (ASIC), and a field-programmable gate array (FPGA).

The CPU 101 functions as an arithmetic processing apparatus and a control apparatus, and controls general operations in the information processing apparatus 100 or some of the general operations in accordance with various programs recorded in the ROM 102, the RAM 103, the storage apparatus 110, or a removable recording medium 80. The storage uni 22, 32, and 44 may be the ROM 102, the RAM 103, the storage apparatus 110, or the removable recording medium 80.

The ROM 102 stores programs, operation parameters, and the like to be used by the CPU 101. The RAM 103 temporarily stores programs to be used in execution of the CPU 101, parameters to be changed as appropriate in the execution, and the like.

The CPU 101, the ROM 102, and the RAM 103 are connected to one another via the host bus 104 constituted by an internal bus such as a CPU bus. In addition, the host bus 104 is connected to the external bus 106 such as a peripheral component interconnect/interface (PCI) bus via the bridge 105.

The input apparatus 108 includes, for example, an apparatus that the user operates, such as a mouse, a keyboard, a touch panel, a button, a switch, a lever, and the like. The input apparatus 108 may be, for example, a remote control apparatus utilizing infrared rays or other radio waves, or may be an external connection apparatus 70 compatible with operations of the information processing apparatus 100, such as a portable phone.

The input apparatus 108 includes an input control circuit that generates an input signal on the basis of information input by the user and outputs the input signal to the CPU 101. The user operates this input apparatus 108 to thereby input various types of data into the information processing apparatus 100 or instruct the information processing apparatus 100 to perform a processing operation. The input unit 42 may be the input apparatus 108.

The output apparatus 109 is constituted by an apparatus capable of notifying the user of acquired information by the use of a sense such as a sense of sight, a sense of hearing, and a sense of touch. The output apparatus 109 can be, for example, a display apparatus such as a liquid crystal display (LCD) and an organic electro-luminescence (EL) display, an audio output apparatus such as a speaker and headphones, a vibrator, or the like.

The output apparatus 109 outputs results obtained by the processing of the information processing apparatus 100, as pictures such as texts and images, sounds such as speech and acoustic sounds, vibrations, or the like. The display units 23 and 41 may be the output apparatus 109.

The storage apparatus 110 is an apparatus for storing data, which is configured as an example of the storage unit of the information processing apparatus 100. The storage apparatus 110 is constituted by, for example, a magnetic storage device such as a hard disk drive (HDD), a semiconductor storage device, an optical storage device, a magneto-optical storage device, and the like. The storage apparatus 110 stores, for example, programs and various types of data to be executed by the CPU 101, various types of data externally acquired, and the like.

The drive 111 is a reader/writer for the removable recording medium 80 such as a magnetic disk, an optical disc, a magneto-optical disk, and a semiconductor memory. The drive 111 is built in the information processing apparatus 100 or externally connected to the information processing apparatus 100. The drive 111 reads information recorded on the mounted removable recording medium 80 and outputs the information to the RAM 103. Moreover, the drive 111 writes records on the mounted removable recording medium 80.

A connection port 112 is a port for connecting an apparatus to the information processing apparatus 100. The connection port 112 can be, for example, a universal serial bus (USB) port, an IEEE1394 port, a small computer system interface (SCSI) port, or the like.

Moreover, the connection port 112 may be an RS-232C port, an optical audio terminal, a high-definition multimedia interface (HDMI) (registered trademark) port, or the like. By connecting the external connection apparatus 70 to the connection port 112, various types of data are exchanged between the information processing apparatus 100 and the external connection apparatus 70.

The communication apparatus 113 is, for example, a communication interface constituted by a communication device for connecting to the network N and the like. The communication apparatus 113 can be, for example, a local area network (LAN), Bluetooth (registered trademark), Wi-Fi, a communication card for a wireless USB (WUSB), or the like.

Alternatively, the communication apparatus 113 may be a router for optical communication, a router for an asymmetric digital subscriber line (ADSL), various modems for communication, or the like. The communication apparatus 113 sends and receives, for example, signals and the like by using a predetermined protocol such as TCP/IP to/from the Internet or another communication apparatus.

Moreover, the network N connected to the communication apparatus 113 is a network connected with a wire or wirelessly, and can include, for example, the Internet, a household LAN, infrared communication, radio communication, satellite communication, and the like.

The imaging apparatus 114 is, for example, an apparatus that captures an image of a real space and generates the captured image by using various members an image pickup element such as a complementary metal oxide semiconductor (CMOS) and a charge coupled device (CCD), a lens for controlling imaging of an image of an object on the image pickup element, and the like. The imaging apparatus 114 may capture still images or may capture moving images.

The sensor 115 includes, for example, various sensors such as an acceleration sensor, an angular velocity sensor, a geomagnetic sensor, an illuminance sensor, a temperature sensor, an atmospheric pressure sensor, and a sound sensor (microphone).

The sensor 115 acquires, for example, information about states of the information processing apparatus 100 itself, such as an attitude of a casing of the information processing apparatus 100 and information about the surrounding environment of the information processing apparatus 100, such as brightness and noise in the periphery of the information processing apparatus 100. Moreover, the sensor 115 may include a GPS receiver that receives global positioning system (GPS) signals and measures latitude, longitude, and altitude of the apparatus.

Hereinabove, configuration examples of the information processing system have been shown. Each of the above-mentioned components may be configured by using a general-purpose members or may be configured by using a member specialized for the function of each component. Such a configuration can be changed as appropriate in accordance with the state-of-the-art at each time when the configuration is carried out.

### [Operation of Information Processing System]

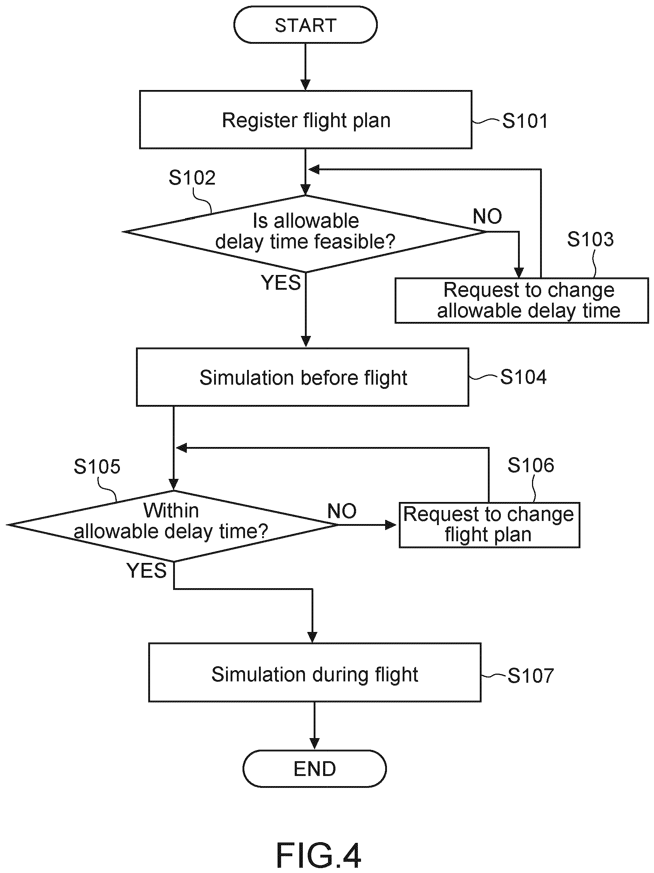

Fig. 4 is a flowchart showing a flow of a typical operation of the information processing system 1. Hereinafter, the operation of the information processing system 1 will be described referring to Fig. 4 as appropriate.

### (Step S101: Register Flight Plan)

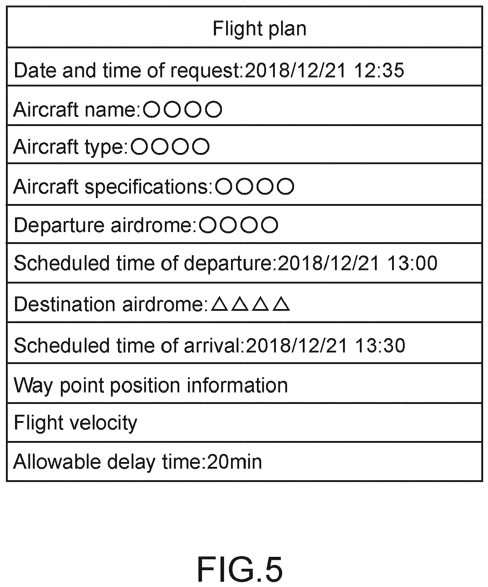

Fig. 5 is a diagram showing an example of a data table of a flight plan. The user who operates the drone aircraft 50 or 60 registers the flight plan of the drone aircraft 50 or 60 in the information processing apparatus 20 (the flight plan management unit 2121) via the operation apparatus 40. The flight plan is an example of the "movement plan" in the scope of claims.

As shown in Fig. 5, the flight plan is data including information about date and time of request (date and time when the flight plan is registered in the flight plan management unit 2121), an aircraft name, an aircraft type, aircraft specifications, a departure airdrome, a scheduled time of departure, a destination airdrome, a scheduled time of arrival, position information (longitude, latitude, and altitude) of a way point (intermediate via-point from the departure airdrome to the destination airdrome), a flight velocity, an allowable delay time, and the like, and has a similar meaning also in the following descriptions.

Here, as shown in Fig. 5, the flight plan in this embodiment, the user who operates the drone aircraft 50 or 60 sets the allowable delay time. The allowable delay time is a delay time that the user can accept and allow with respect to a scheduled time which takes for the drone aircraft 50 or 60 to arrive at an arrival point from a departure point, and has a similar meaning also in the following descriptions.

### (Step S102: Is Allowable Delay Time Feasible?)

The flight plan management unit 2121 determines whether or not the allowable delay time set by the user is feasible. For example, the flight plan management unit 2121 determines whether or not the allowable delay time set with respect to the drone aircraft 50 or 60 is feasible, on the basis of the remaining amount of power of the drone aircraft 50 or 60, which is the aircraft specifications in the flight plan registered in the information processing apparatus 20 in previous Step S101.

Here, in a case where the flight plan management unit 2121 determines that the allowable delay time is not feasible (NO in Step S102), the flight plan management unit 2121 requests the user to reset the allowable delay time via the operation apparatus 40 (Step S103). On the other hand, in a case where the flight plan management unit 2121 determines that the allowable delay time is feasible (YES in Step S102), the flight plan management unit 2121 outputs information about the flight plan to the trajectory generation unit 2122.

### (Step S104: Simulation before Flight)

On the basis of the flight plans acquired from the flight plan management unit 2121, the trajectory generation unit 2122 calculates predicted trajectories R1 and R2 in which the drone aircraft 50 and 60 arrive at the destination airdromes from the departure airdromes and outputs these calculation results to the simulation unit 2123.

Specifically, the trajectory generation unit 2122, for example, assumes that the drone aircraft 50 and 60 move on the routes connecting the way points of the requested flight plans at a cruising velocity or a set velocity, simulates passage times, and calculates predicted trajectories. At that time, the trajectory generation unit 2122 also simulates differences in the set velocity between the way points and temporary velocity changes due to turns (e.g., a curve turn or a linear turn including a stop) in view of the aircraft performance.

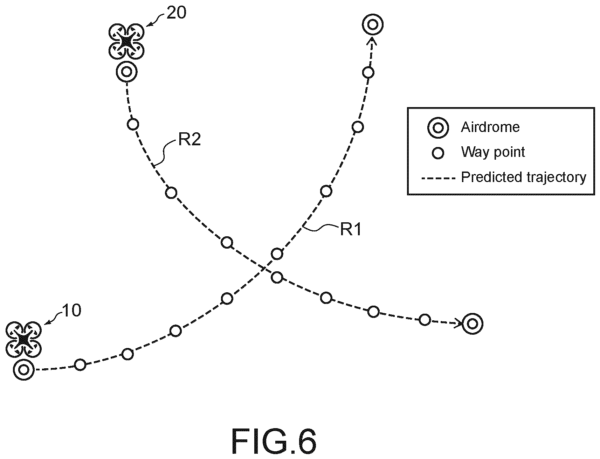

Fig. 6 is a conceptual diagram showing the predicted trajectories R1 and R2 of the drone aircraft 50 and 60. The conflict detection unit 2123a determines whether or not a conflict will occur between the predicted trajectories R1 and R2 of the drone aircraft 50 and 60. Here, the conflict means an abnormal approach including a collision between the drone aircraft 50 and 60, and has a similar meaning also in the following descriptions. For example, the conflict detection unit 2123a determines that a conflict will occur in a case where the distance between the drone aircraft 50 and 60 is shorter than 30 m and determines that a conflict will not occur in a case where the distance between the drone aircraft 50 and 60 is equal to or longer than 30 m.

In a case where the conflict detection unit 2123a determines that a conflict will occur between the predicted trajectories R1 and R2, the conflict detection unit 2123a outputs an instruction to pass through a conflict point (intersection point between the predicted trajectories R1 and R2) to the operation apparatus 40 that operates one aircraft of the drone aircraft 50 and 60, the flight plan of which has been registered in the information processing apparatus 20 before the other aircraft, and outputs an instruction to avoid the conflict to the operation apparatus 40 that operates the other aircraft, the flight plan of which has been registered in the information processing apparatus 20 after the one aircraft. Accordingly, the instruction to avoid the conflict is output from the operation apparatus 40 to one of the drone aircraft 50 and 60, the flight plan of which has been registered in the information processing apparatus 20 after the other, and execution of this instruction is planned.

Fig. 7 is a diagram showing an example of a data table showing an update history of the flight plans of the drone aircraft 50 and 60. The storage unit 22 stores an update history of various types of drone aircraft as a data table as shown in Fig. 7, for example. It should be noted that specific numerical values in Figs. 5 and 7 are merely exemplary, and are not limited to these values as a matter of course.

The storage unit 22 updates the data table every time a flight plan is acquired from the drone aircraft 50 or 60 or every time results of computing are acquired from the delay time estimation unit 2123b and the conflict detection unit 2132a.

Here, as shown in Fig. 7, for example, in a case where the flight plan of the drone aircraft 60 has been registered in the information processing apparatus 20 before the drone aircraft 50, the delay time estimation unit 2123b predicts a delay time in a case where the drone aircraft 50 avoids the conflict between the predicted trajectories R1 and R2. The delay time is a delay time predicted before the flight of the drone aircraft 50.

Specifically, the delay time estimation unit 2123b calculates, as the delay time, a difference between a predicted time that takes for the drone aircraft 50 to arrive at the destination airdrome from the departure airdrome (a difference between the scheduled time of departure and the scheduled time of arrival in the flight plan of the drone aircraft 50) and a predicted time that takes for the drone aircraft 50 to take off from the departure airdrome, avoid the conflict between the predicted trajectories R1 and R2, and arrive at the destination airdrome (assuming that the drone aircraft 50 moves at the cruising velocity or the set velocity on the route connecting the way points reset for avoiding the conflict, a flight time re-simulated in a case of passing through those way points).

### (Step S105: Within Allowable Delay Time?)

In a case where the delay time calculated (predicted) in previous Step S104 exceeds the allowable delay time as shown in Fig. 7 (NO in Step S105), the delay time estimation unit 2123b requests the user to reset the flight plan via the operation apparatus 40 (Step S106). At that time, the delay time estimation unit 2123b requests the user who operates the drone aircraft 50 or the drone aircraft 60 to change the various parameters (the scheduled time of departure, the scheduled time of arrival, the flight velocity, the allowable delay time, and the like) that constitute the flight plan, for example.

On the other hand, in a case where the delay time calculated (predicted) in previous Step S104 is within the allowable delay time (YES in Step S105), the traffic management unit 213 executes Step S107 to be described later.

### (Step S107: Simulation during Flight)

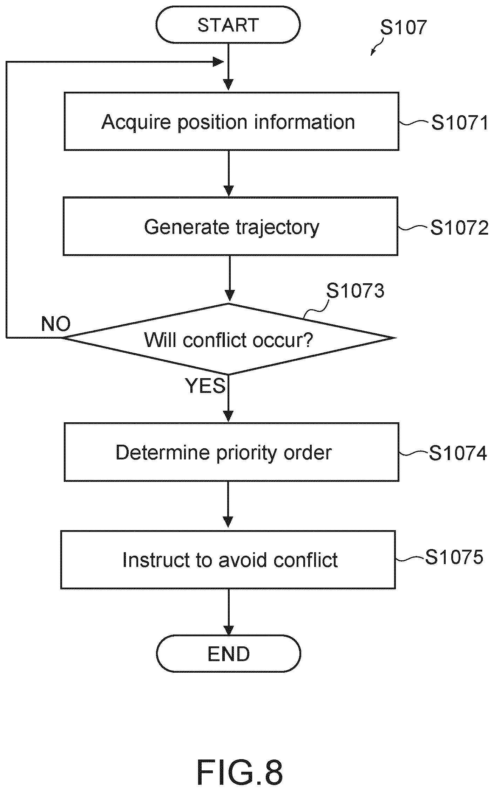

Fig. 8 is a flowchart showing details of Step S107. Hereinafter, Step S107 will be described with reference to Fig. 8.

The position acquisition unit 2131c acquires the position information of the drone aircraft 50 and 60 flying in the airspace from the operation apparatus 40. Alternatively, the position acquisition unit 2131c acquires the position information of the drone aircraft 50 and 60 from the radar (Step S1071).

Moreover, the external information acquisition unit 2131b acquires, from the external information apparatus 30, the environmental information (the weather information, the topographic information, the obstacle information, the prohibited-airspace information, and the manned-aircraft position information) stored in the storage unit 32. In addition, the flight plan acquisition unit 2131a acquires, from the flight operations management unit 212, the flight plans of the drone aircraft 50 and 60, which have been registered in the flight plan management unit 2121.

Subsequently, on the basis of the position information of the drone aircraft 50 and 60, the environmental information, and the flight plans of the drone aircraft 50 and 60, the trajectory generation unit 2131 calculates trajectories R1' and R2' in which the drone aircraft 50 and 60 have flown to the current positions from the departure airdromes and predicts trajectories R1" and R2" to the destination airdromes from the current positions (Step S1072). At that time, the trajectory generation unit 2131 re-simulates, for example, the predicted trajectories R1" and R2" on the basis of the current position information of the drone aircraft 50 and 60, the set flight plans, and the aircraft states (remaining battery, various types of malfunction information, etc.), the weather conditions on the way to the destinations, and the like. The trajectory generation unit 2131 outputs the calculation results of the trajectories R1', R2', R1", and R2" to the simulation unit 2132.

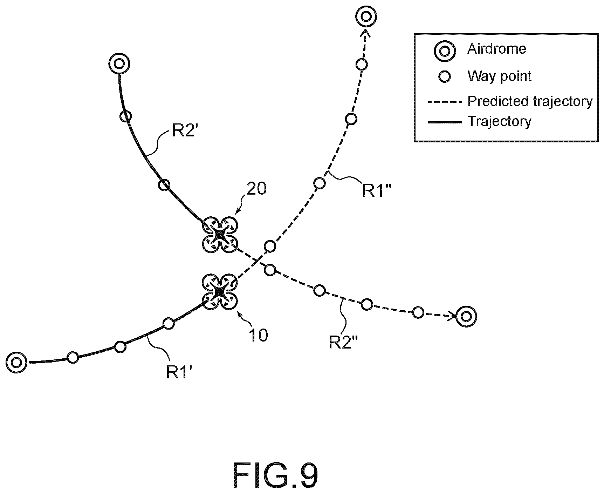

Fig. 9 is a conceptual diagram showing the trajectories R1', R2', R1", and R2" of the drone aircraft 50 and 60 in flight. The conflict detection unit 2132a determines whether or not a conflict will occur between the predicted trajectories R1" and R2".

In a case where the conflict detection unit 2132a determines that a conflict will occur between the predicted trajectories R1" and R2" (YES in Step S1073), the conflict detection unit 2132a predicts a delay time in a case of avoiding such a conflict with respect to each of the drone aircraft 50 and 60. The delay time is a delay time predicted with respect to the drone aircraft 50 or 60 in flight.

Specifically, the conflict detection unit 2132a calculates, as the delay time, a difference between a predicted time that takes for the drone aircraft 50 or 60 to arrive at the destination airdrome from the current position and a predicted time that takes for the drone aircraft 50 or 60 to avoid the conflict from the current position and arrive at the destination airdrome (assuming that the drone aircraft 50 or 60 moves at the cruising velocity or the set velocity on the route connecting the way points reset for avoiding the conflict, a flight time re-simulated in a case of passing through those way points).

Here, the priority order determination unit 2132b outputs an instruction to pass through a conflict point (intersection point between the predicted trajectories R1" and R2") to the operation apparatus 40 that operates one aircraft of the drone aircraft 50 and 60 in flight, the predicted delay time of which exceeds the allowable delay time, and outputs an instruction to avoid the conflict to the operation apparatus 40 that operates the other aircraft, the predicted delay time of which is shorter than the allowable delay time (Step S1074).

Accordingly, the instruction to avoid the conflict is output from the operation apparatus 40 to one of the drone aircraft 50 and 60 in flight, the predicted delay time of which is shorter than the allowable delay time, and this instruction is executed (Step S1075).

For example, in a case where the predicted delay time of the drone aircraft 50 in flight exceeds the allowable delay time and the predicted delay time of the drone aircraft 60 in flight does not exceed the allowable delay time as shown in Fig. 7, the avoidance instruction unit 2132bc outputs, to the operation apparatus 40 of the user who operates the drone aircraft 60, the instruction to avoid the conflict between the predicted trajectories R1" and R2", i.e., the instruction to avoid the conflict between the drone aircraft 50 and 60 in flight.

### [Actions and Effects]

On the basis of the registration order when the flight plans of the drone aircraft 50 and 60 have been registered in the information processing apparatus 20 and the allowable delay time, the control unit 21 determines an aircraft of the drone aircraft 50 and 60, which is to avoid the conflict between the trajectories of these aircraft, and instructs the determined aircraft to avoid such a conflict.

Accordingly, the drone aircraft 50 and 60 can be made to fly in accordance with a flight situation at the time when the flight plans of the drone aircraft 50 and 60 have been registered in the information processing apparatus 20.

That is, the drone aircraft 50 and 60 can be made to fly following a plan in which which aircraft of the drone aircraft 50 and 60 should be made to avoid a conflict has been predetermined at the time of simulation before the flight.

Therefore, the flight plan of one drone aircraft of the drone aircraft 50 and 60 is prevented from being changed due to the other drone aircraft, and the fairness in avoiding a conflict is ensured.

Moreover, the control unit 21 according to this embodiment determines whether or not a conflict will occur between the drone aircraft 50 and 60 in motion. At that time, the control unit 21 predicts, for example, a delay time in a case where the drone aircraft 50 avoids such a conflict, and instructs the drone aircraft 60 in motion to avoid the conflict in a case where the predicted delay time exceeds the allowable delay time set for the drone aircraft 50.

Accordingly, the drone aircraft 60, the predicted delay time of which is shorter than the allowable delay time even in a case of avoiding the conflict between the drone aircraft 50 and 60 in motion in place of the drone aircraft 50, the predicted delay time of which exceeds the allowable delay time in a case of avoiding such a conflict, avoids the conflict.

Therefore, while preventing the drone aircraft 50 from being excessively delayed in avoiding the conflict between the drone aircraft 50 and 60 in motion, such a conflict is avoided such that the delay times of both of the drone aircraft 50 and 60 are shorter than the allowable delay time. That is, the burden in terms of time in a case of avoiding the conflict between the drone aircraft 50 and 60 in motion is prevented from being imposed only to the drone aircraft 50.

### <Second Embodiment>

### [Operation of Information Processing System]

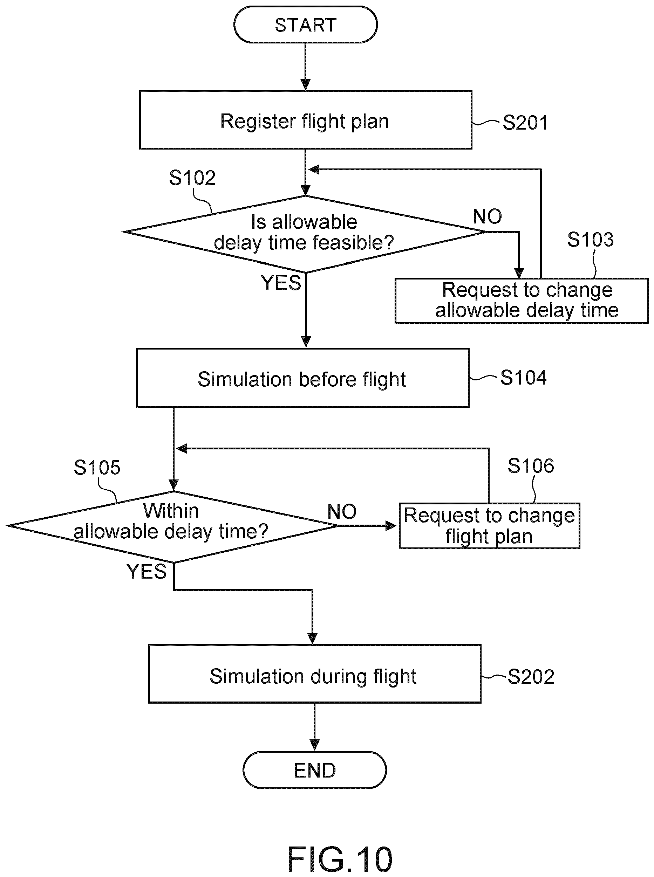

Fig. 10 is a flowchart showing a flow of a typical operation of an information processing system 1 according to a second embodiment. Hereinafter, the operation of the information processing system 1 according to the second embodiment will be described referring to Fig. 10 as appropriate. It should be noted that configurations and steps similar to those of the first embodiment will be denoted by similar reference signs and descriptions thereof will be omitted.

The second embodiment is different from the first embodiment in that in the second embodiment, respective flight plans of two or more, a plurality of drone aircraft are registered in the information processing apparatus 20 and a conflict between these aircraft is avoided in a cooperative manner.

### (Step S201: Register Flight Plan)

Each of users who respectively operates the plurality of drone aircraft registers a flight plan of each of the plurality of drone aircraft in the information processing apparatus 20 (the flight plan management unit 2121) via the operation apparatus 40. Accordingly, the control unit 21 acquires the flight plan of each of the plurality of drone aircraft.

### (Step S202: Simulation in Flight)

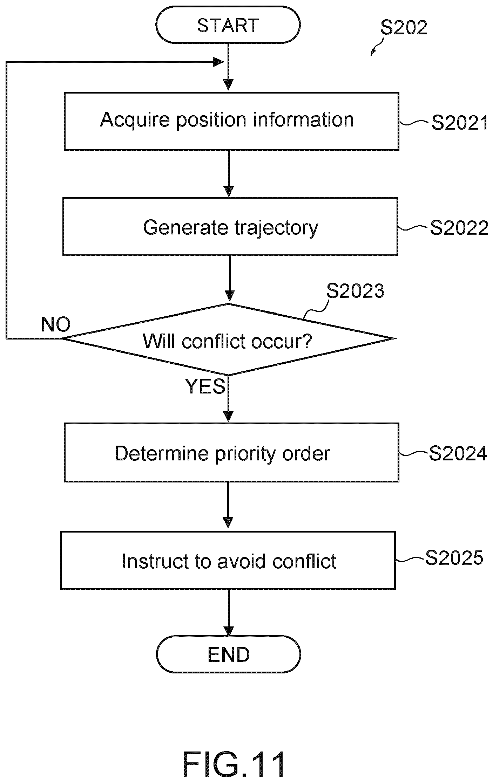

Fig. 11 is a flowchart showing details of Step S202. Hereinafter, Step S202 will be described with reference to Fig. 11.

The position acquisition unit 2131c acquires position information of each of the plurality of drone aircraft flying in the airspace from the operation apparatus 40. Alternatively, the position acquisition unit 2131c acquires the position information of each of the plurality of drone aircraft from the radar (Step S2021).

Moreover, the external information acquisition unit 2131b acquires, from the external information apparatus 30, the environmental information (the weather information, the topographic information, the obstacle information, the prohibited-airspace information, and the manned-aircraft position information) stored in the storage unit 32. In addition, the flight plan acquisition unit 2131a acquires, from the flight operations management unit 212, the flight plan of each of the plurality of drone aircraft, which has been registered in the flight plan management unit 2121.

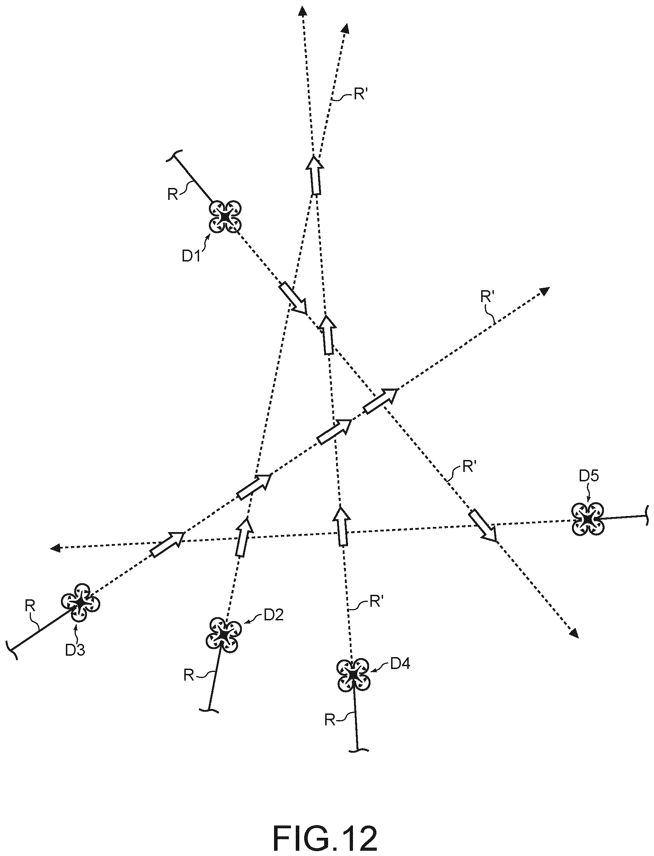

Subsequently, on the basis of the position information of each of the plurality of drone aircraft, the environmental information, and the flight plan of each of the plurality of drone aircraft, the trajectory generation unit 2131 calculates a trajectory R flying from the departure airdrome to the current position of each of the plurality of drone aircraft and predicts a trajectory R' from the current position to the destination flight information (see Step S2022 in Fig. 12). At that time, the trajectory generation unit 2131 re-simulates a predicted trajectory R' on the basis of, for example, the current position information of each of the plurality of drone aircraft, the set flight plan, and the aircraft states (remaining battery, various types of malfunction information, etc.), the weather condition on the way to the destination, and the like.

Fig. 12 is a conceptual diagram showing the trajectories R and R' of each of the plurality of drone aircraft in flight. The conflict detection unit 2132a determines whether or not a conflict will occur between the respective predicted trajectories R' of the plurality of drone aircraft.

In a case where the conflict detection unit 2132a determines that a conflict will occur between the predicted trajectories R' (YES in Step S2023), the conflict detection unit 2132a predicts a delay time in a case of avoiding the conflict between the drone aircraft with respect to each of the plurality of drone aircraft in flight.

Specifically, with respect to each of the plurality of drone aircraft, the conflict detection unit 2132a calculates, as the delay time, a difference between a predicted time that takes to arrive at the destination airdrome from the current position and a predicted time that takes to avoid the conflict from the current position and arrive at the destination airdrome (assuming that the drone aircraft moves at the cruising velocity or the set velocity on the route connecting the way points reset for avoiding the conflict, a flight time re-simulated in a case of passing through those way points).

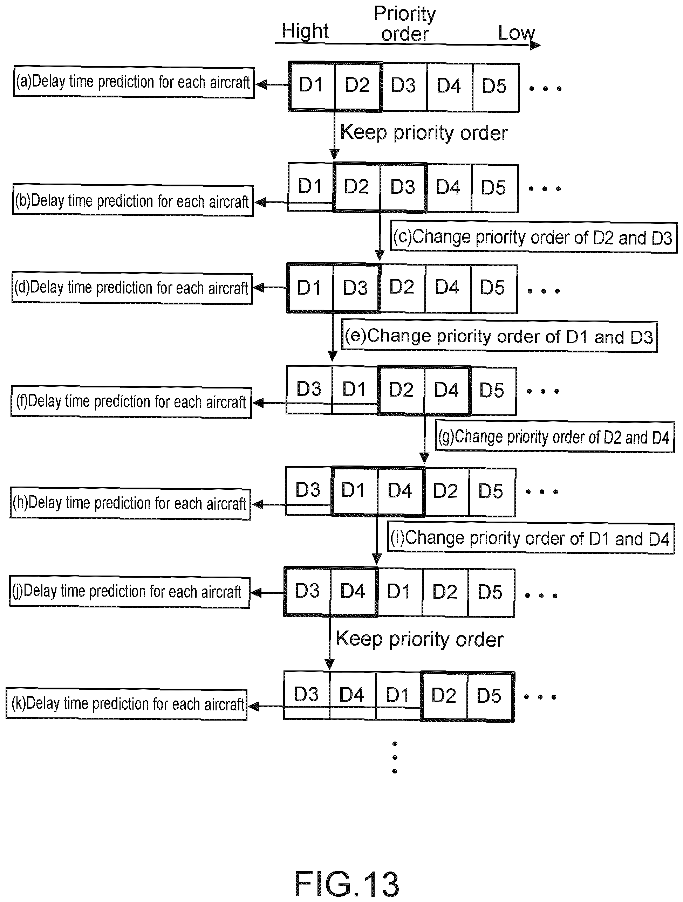

Next, with respect to each of the plurality of drone aircraft in flight, the priority order determination unit 2132b determines whether or not the predicted delay time is shorter than the allowable delay time. In addition, the priority order determination unit 2132b determines a priority order in avoiding the conflict between the drone aircraft so that the drone aircraft, the predicted delay time of which is equal to or longer than the allowable delay time, takes priority over the drone aircraft, the predicted delay time of which is shorter than the allowable delay time (Step S2024). Hereinafter, a specific example of a method of determining this priority order will be described with reference to Fig. 13.

Fig. 13 is a conceptual diagram showing a process to change the priority order with respect to each of the plurality of drone aircraft. In the following description, the plurality of drone aircraft will be referred to as drone aircraft D1, D2, D3, D4, and D5, respectively, in order of registering the flight plans in the information processing apparatus 20. This registration order is an initial priority order in avoiding the conflict between the drone aircraft.

First of all, the priority order determination unit 2132b predicts, with respect to each of the drone aircraft D1 and D2, a delay time in a case of avoiding a conflict between the drone aircraft D1 and D2 (Fig. 13a).

In a case where with respect to the drone aircraft D1 and D2, both predicted delay times are shorter than the allowable delay time, then the priority order determination unit 2132b predicts, with respect to each of the drone aircraft D2 and D3, a delay time in a case of avoiding a conflict between the drone aircraft D2 and D3 (Fig. 13b) .

Here, in a case where the predicted delay time of the drone aircraft D3 exceeds the allowable delay time and the predicted delay time of the drone aircraft D2 does not exceed the allowable delay time, the priority order determination unit 2132b changes the priority order of the drone aircraft D2 and D3 (Fig. 13c), and predicts, with respect to each of the drone aircraft D1 and D3, a delay time in a case of avoiding a conflict between the drone aircraft D1 and D3 (Fig. 13d) .

Subsequently, in a case where the predicted delay time of the drone aircraft D3 exceeds the allowable delay time and the predicted delay time of the drone aircraft D1 does not exceed the allowable delay time, the priority order determination unit 2132b changes the priority order of the drone aircraft D1 and D3 (Fig. 13e), and predicts, with respect to each of the drone aircraft D2 and D4, a delay time in a case of avoiding a conflict between the drone aircraft D2 and D4 (Fig. 13f).

Here, in a case where the predicted delay time of the drone aircraft D2 exceeds the allowable delay time and the predicted delay time of the drone aircraft D4 does not exceed the allowable delay time, the priority order determination unit 2132b changes the priority order of the drone aircraft D2 and D4 (Fig. 13g), and predicts, with respect to each of the drone aircraft D1 and D4, a delay time in a case of avoiding a conflict between the drone aircraft D1 and D4 (Fig. 13h) .

Subsequently, in a case where the predicted delay time of the drone aircraft D4 exceeds the allowable delay time and the predicted delay time of the drone aircraft D1 does not exceed the allowable delay time, the priority order determination unit 2132b changes the priority order of the drone aircraft D1 and D4 (Fig. 13i), and predicts, with respect to each of the drone aircraft D3 and D4, a delay time in a case of avoiding a conflict between the drone aircraft D3 and D4 (Fig. 13j).

Here, in a case where with respect to the drone aircraft D3 and D4, both predicted delay times are shorter than the allowable delay time, then the priority order determination unit 2132b predicts, with respect to each of the drone aircraft D2 and D5, a delay time in a case of avoiding a conflict between the drone aircraft D2 and D5 (Fig. 13k).

Thereafter, similarly, the priority order determination unit 2132b compares the delay time generated in the current priority order with the allowable delay time, performs the processing of changing the priority order on all the drone aircraft, and determines the priority order for avoiding the conflict between the drone aircraft. The avoidance instruction unit 2123b outputs the avoidance instruction according to the thus determined priority order to each of the plurality of drone aircraft, and this instruction is executed (Step S2025).

Specifically, for example, in a case where the priority order for avoiding the conflict between the plurality of drone aircraft is determined as the order of D3, D4, D1, D2, and D5, the avoidance instruction unit 2123b outputs, to the operation apparatus 40 of the user who operates the drone aircraft D3, an instruction to pass through all conflict points between the predicted trajectory R' of the drone aircraft D3 and the predicted trajectories R' of the drone aircraft D1, D2, D4, and D5 (intersection points between the predicted trajectories) (see Fig. 12).

Moreover, the avoidance instruction unit 2123b outputs, to the operation apparatus 40 of the user who operates the drone aircraft D4, an instruction to pass through conflict points between the predicted trajectory R' of the drone aircraft D4 and the predicted trajectories R' of the drone aircraft D1, D2, and D5 and avoid conflict points between the predicted trajectory R' of the drone aircraft D4 and the predicted trajectory R' of the drone aircraft D3 (see Fig. 12).

In addition, the avoidance instruction unit 2123b outputs, to the operation apparatus 40 of the user who operates the drone aircraft D1, an instruction to pass through conflict points between the predicted trajectory R' of the drone aircraft D1 and the predicted trajectories R' of the drone aircraft D2 and D5 and avoid conflict points between the predicted trajectory R' of the drone aircraft D1 and the predicted trajectories R' of the drone aircraft D3 and D4 (see Fig. 12).

In addition, the avoidance instruction unit 2123b outputs, to the operation apparatus 40 of the user who operates the drone aircraft D2, an instruction to pass through conflict points between the predicted trajectory R' of the drone aircraft D2 and the predicted trajectory R' of the drone aircraft D5 and avoid conflict points between the predicted trajectory R' of the drone aircraft D2 and the predicted trajectories R' of the drone aircraft D1, D3, and D4 (see Fig. 12).

Moreover, the avoidance instruction unit 2123b outputs, to the operation apparatus 40 of the user who operates the drone aircraft D5, an instruction to avoid all the conflict points between the predicted trajectory R' of the drone aircraft D5 and the predicted trajectories R' of the drone aircraft D1, D2, D3, and D4 (intersection points between the predicted trajectories) (see Fig. 12).

Accordingly, the burden in terms of time due to the conflicts that will occur between the plurality of drone aircraft D1 to D5 is reduced by these aircraft in a cooperative manner, and situations where some aircraft are excessively delayed from the allowable delay times set by the users due to avoiding such conflicts are reduced.

### <Third Embodiment>

### [Configuration of Information Processing System]

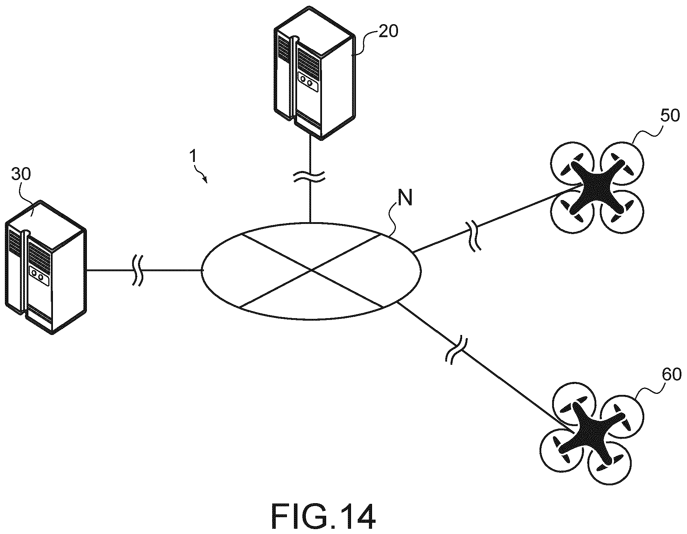

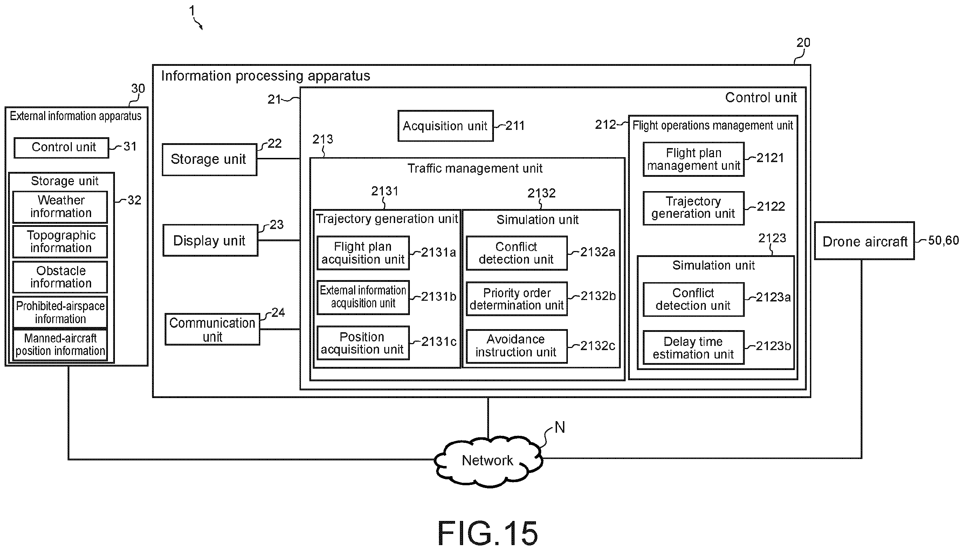

Fig. 14 is a schematic diagram showing a configuration example of an information processing system 1 according to a third embodiment. Fig. 15 is a block diagram showing a configuration example of the information processing system 1. Hereinafter, configurations similar to those of the information processing system 1 according to the first embodiment will be denoted by similar reference signs and descriptions thereof will be omitted or simplified.

An information processing apparatus 20, an external information apparatus 30, and drone aircraft 50 and 60 in the third embodiment are communicably connected to one another via a network N. The drone aircraft 50 and 60 are connected to the information processing apparatus 20 by wireless communication. Communication standards for connecting the drone aircraft 50 and 60 to the information processing apparatus 20 may be, for example, long term evolution (LTE) communication, Wi-Fi, or the like, and there are no limitations on the types.

The third embodiment is different from the first embodiment in that the drone aircraft 50 and 60 according to the third embodiment are flying objects the flight plans of which are input into the information processing apparatus 20 before the flight or during the flight and which autonomously fly on the basis of the input flight plans.

### [Operation of Information Processing System]

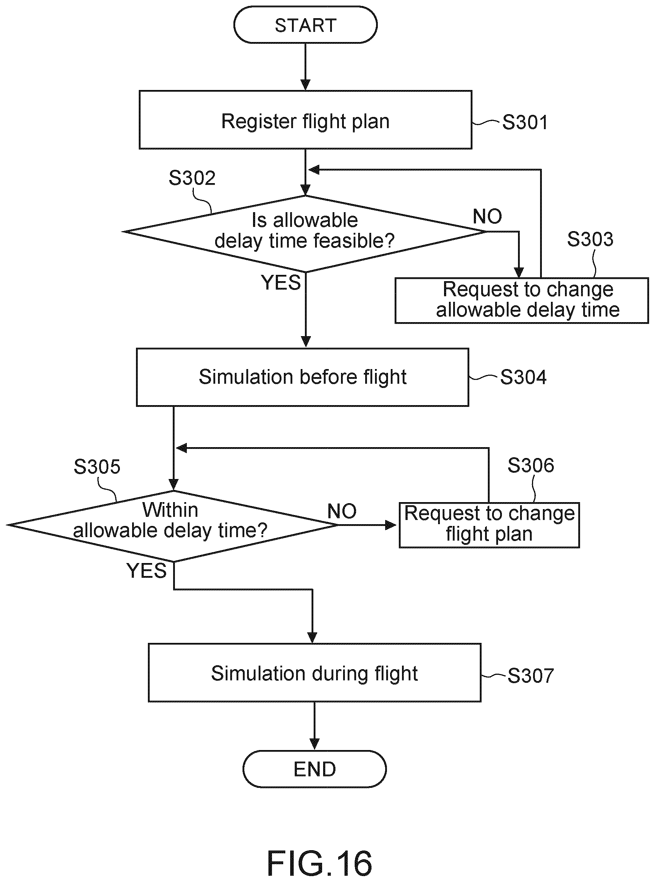

Fig. 16 is a flowchart showing a flow of a typical operation of the information processing system 1 according to the third embodiment. Hereinafter, the operation of the information processing system 1 according to the third embodiment will be described referring to Fig. 16 as appropriate.

### (Step S301: Register Flight Plan)

The user registers a flight plan of the drone aircraft 50 or 60 in the information processing apparatus 20 (the flight plan management unit 2121).

### (Step S302: Is Allowable Delay Time Feasible?)

The flight plan management unit 2121 determines whether or not the allowable delay time set by the user is feasible. For example, the flight plan management unit 2121 determines whether or not the allowable delay time set for the drone aircraft 50 or 60 is feasible on the basis of the remaining amount of power of the drone aircraft 50 or 60, which is the aircraft specifications in the flight plan registered in the information processing apparatus 20 in previous Step S301.

Here, in a case where the flight plan management unit 2121 determines that the allowable delay time is not feasible (NO in Step S302), the flight plan management unit 2121 requests the drone aircraft 50 or 60 to reset the allowable delay time (Step S303). On the other hand, in a case where the flight plan management unit 2121 determines that the allowable delay time is feasible (YES in Step S302), the flight plan management unit 2121 outputs information about the flight plan to the trajectory generation unit 2122.

### (Step S304: Simulation before Flight)

On the basis of the flight plans acquired from the flight plan management unit 2121, the trajectory generation unit 2122 calculates predicted trajectories R1 and R2 in which the drone aircraft 50 and 60 arrive at the destination airdromes from the departure airdromes and outputs these calculation results to the simulation unit 2123.

Specifically, the trajectory generation unit 2122, for example, assumes that the drone aircraft 50 and 60 move on the routes connecting the way points of the requested flight plans at a cruising velocity or a set velocity, simulates passage times, and calculates predicted trajectories. At that time, the trajectory generation unit 2122 also simulates differences in the set velocity between the way points and temporary velocity changes due to turns (e.g., a curve turn or a linear turn including a stop) in view of the aircraft performance.

The conflict detection unit 2123a determines whether or not a conflict will occur between the predicted trajectories R1 and R2 of the drone aircraft 50 and 60. In a case where the conflict detection unit 2123a determines that a conflict will occur between the predicted trajectories R1 and R2, the conflict detection unit 2123a outputs an instruction to pass through a conflict point (intersection point between the predicted trajectories R1 and R2) to one drone aircraft of the drone aircraft 50 and 60, the flight plan of which has been registered in the information processing apparatus 20 before the other drone aircraft, and outputs an instruction to avoid the conflict to the other drone aircraft, the flight plan of which has been registered in the information processing apparatus 20 after the one drone aircraft, and execution of this instruction is planned.

Here, as shown in Fig. 7, for example, in a case where the flight plan of the drone aircraft 60 has been registered in the information processing apparatus 20 before the drone aircraft 50, the delay time estimation unit 2123b predicts a delay time in a case where the drone aircraft 50 avoids the conflict between the predicted trajectories R1 and R2. The delay time is a delay time predicted before the flight of the drone aircraft 50.

### (Step S305: Within Allowable Delay Time?)

In a case where the delay time calculated (predicted) in previous Step S304 exceeds the allowable delay time as shown in Fig. 7 (NO in Step S305), the delay time estimation unit 2123b requests the user to reset the flight plan via the operation apparatus 40 (Step S306). At that time, the delay time estimation unit 2123b requests the user to change the various parameters (the scheduled time of departure, the scheduled time of arrival, the flight velocity, the allowable delay time, and the like) that constitute the flight plan, for example.

On the other hand, in a case where the delay time calculated (predicted) in previous Step S304 is within the allowable delay time (YES in Step S305), the traffic management unit 213 executes Step S307 to be described later.

### (Step S307: Simulation during Flight)

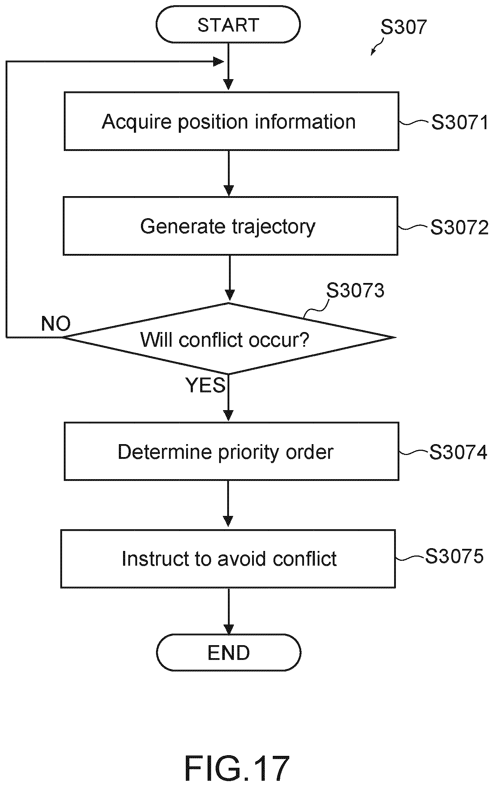

Fig. 17 is a flowchart showing details of Step S307. Hereinafter, Step S307 will be described with reference to Fig. 17.

The position acquisition unit 2131c acquires the position information of the drone aircraft 50 and 60 flying in the airspace from the drone aircraft 50 and 60 (Step S3071).

Moreover, the external information acquisition unit 2131b acquires, from the external information apparatus 30, the environmental information (the weather information, the topographic information, the obstacle information, the prohibited-airspace information, and the manned-aircraft position information) stored in the storage unit 32. In addition, the flight plan acquisition unit 2131a acquires, from the flight operations management unit 212, the flight plans of the drone aircraft 50 and 60, which have been registered in the flight plan management unit 2121.

Subsequently, on the basis of the position information of the drone aircraft 50 and 60, the environmental information, and the flight plans of the drone aircraft 50 and 60, the trajectory generation unit 2131 calculates trajectories R1' and R2' in which the drone aircraft 50 and 60 have flown to the current positions from the departure airdromes and predicts trajectories R1" and R2" to the destination airdromes from the current positions (Step S3072). At that time, the trajectory generation unit 2131 re-simulates, for example, the predicted trajectories R1" and R2" on the basis of the current position information of the drone aircraft 50 and 60, the set flight plans, and the aircraft states (remaining battery, various types of malfunction information, etc.), the weather conditions on the way to the destinations, and the like. The trajectory generation unit 2131 outputs the calculation results of the trajectories R1', R2', R1", and R2" to the simulation unit 2132.

The conflict detection unit 2132a determines whether or not a conflict will occur between the predicted trajectories R1" and R2". In a case where the conflict detection unit 2132a determines that a conflict will occur between the predicted trajectories R1" and R2" (YES in Step S3073), the conflict detection unit 2132a predicts a delay time in a case of avoiding the conflict between the drone aircraft with respect to each of the drone aircraft 50 and 60. The delay time is a delay time predicted with respect to the drone aircraft 50 or 60 in flight.

Specifically, the conflict detection unit 2132a calculates, as the delay time, a difference between a predicted time that takes for the drone aircraft 50 or 60 to arrive at the destination airdrome from the current position and a predicted time that takes for the drone aircraft 50 or 60 to avoid the conflict from the current position and arrive at the destination airdrome (assuming that the drone aircraft 50 or 60 moves at the cruising velocity or the set velocity on the route connecting the way points reset for avoiding the conflict, a flight time re-simulated in a case of passing through those way points).

Here, the priority order determination unit 2132b outputs an instruction to pass through the conflict point (the intersection point between the predicted trajectories R1" and R2") to one drone aircraft of the drone aircraft 50 and 60 in flight, the predicted delay time of which exceeds the allowable delay time, and outputs an instruction to avoid the conflict to the other drone aircraft, the predicted delay time of which is shorter than the allowable delay time (Step S3074).

Accordingly, the instruction to avoid the conflict is output to one of the drone aircraft 50 and 60 in flight, the predicted delay time of which is shorter than the allowable delay time, and this instruction is executed (Step S3075).

For example, in a case where the predicted delay time of the drone aircraft 50 in flight exceeds the allowable delay time and the predicted delay time of the drone aircraft 60 in flight does not exceed the allowable delay time as shown in Fig. 7, the avoidance instruction unit 2132bc outputs, to the drone aircraft 60, the instruction to avoid the conflict between the predicted trajectories R1" and R2", i.e., the instruction to avoid the conflict between the drone aircraft 50 and 60 in flight.

### <Modified Examples>

Hereinabove, the embodiments of the present technology have been described, though the present technology is not limited to the above-mentioned embodiments. Various modifications can be made as a matter of course.

For example, the control unit 21 according to each of the above-mentioned embodiments determines whether or not the allowable delay time set for the drone aircraft 50 or 60 is feasible on the basis of the remaining amount of power of the drone aircraft 50 or 60 and requests the user to reset the allowable delay time in a case where the control unit 21 determines that the allowable delay time is not feasible, though not limited thereto.

For example, the control unit 21 may request the user to set a minimum allowable delay time so that conflicts that will occur due to sudden factors such as the weather getting worse during the flight of the drone aircraft 50 or 60 can also be alleviated.

Moreover, in a case where a conflict with a flight plan registered in advance is predicted at the time of registration of a flight plan of the drone aircraft, the control unit 21 according to each of the above-mentioned embodiments may cause the display unit 41 to display a delay time generated due to avoiding this conflict and request the user to take into account such a delay at the time of setting the allowable delay time.

In addition, the flight plan according to each of the above-mentioned embodiments is data including the information about the date and time of request (date and time when the flight plan has been registered in the flight plan management unit 2121), the aircraft name, the aircraft type, the aircraft specifications, the departure airdrome, the scheduled time of departure, the destination airdrome, the scheduled time of arrival, the position information (the longitude, the latitude, and the altitude) of the way point (intermediate via-point to the destination airdrome from the departure airdrome), the flight velocity and the allowable delay time, and the like, though not limited thereto. The flight plan may be information including at least one of information about the date and time of request, the aircraft name, the aircraft type, the aircraft specifications, the departure airdrome, the scheduled time of departure, the destination airdrome, the scheduled time of arrival, the position information of the way point, the flight velocity, the allowable delay time, and the like.

In addition, the conflict point according to each of the above-mentioned embodiments is the intersection point between the predicted trajectories, though not limited thereto. The conflict point may be a landing place for the drone aircraft. In this case, the landing point may be, for example, a charging point for the drone aircraft.

### <Supplements>

Embodiments of the present technology can include, for example, the information processing apparatus and the system as described above, an information processing method to be performed in the information processing apparatus or the system, a program that causes the information processing apparatus to function, and a non-transitory tangible medium on which the program has been recorded.

Moreover, the above embodiments have been described on the premise that the drone aircraft 50 and 60 are flying objects, though not limited thereto. At least one of the drone aircraft 50 or the drone aircraft 60 may be a flying object.

In addition, the present technology may be applied to movable objects (e.g., robots) other than the flying objects and the applications are not particularly limited. It should be noted that the flying objects include aircraft, unmanned aircraft, unmanned helicopters, and the like other than the drone aircraft.

In addition, the effects described in this specification are merely illustrative or exemplary and not limitative. That is, in addition to or instead of the above-mentioned effects, the present technology can provide other effects obvious to a person skilled in the art in light of the descriptions in this specification.

Although the favorable embodiments of the present technology have been described above in detail with reference to the accompanying drawings, the present technology is not limited to such examples. It is obvious that a person having an ordinary skill in the art of the present technology can conceive various variants or modifications within the scope of the technical ideas described in the scope of claims, and it should be understood that these variants or modifications also fall within the technical scope of the present technology as a matter of course.

It should be noted that the present technology may also take the following configurations.
(1) An information processing apparatus, including
   a control unit that
   predicts a movement path of a first movable object on the basis of a movement plan for which an allowable delay time is set, and
   determines whether or not a conflict will occur between the predicted movement path and a movement path of a second movable object.
(2) The information processing apparatus according to (1), in which
   the movement path of the second movable object is a movement path predicted on the basis of the movement plan of the second movable object.
(3) The information processing apparatus according to (2), in which
   the movement plan of the second movable object includes information about an allowable delay time set for the second movable object.
(4) The information processing apparatus according to any one of (1) to (3), in which
   the control unit determines a movable object that avoids the conflict on the basis of a registration order when the movement plans of the first and second movable objects have been registered in the information processing apparatus and the allowable delay time, and instructs the determined movable object to avoid the conflict.
(5) The information processing apparatus according to any one of (1) to (4), in which
   the control unit determines whether or not the allowable delay time is feasible with respect to the first movable object on the basis of a remaining amount of power of the first movable object.
(6) The information processing apparatus according to any one of (1) to (5), in which
   the control unit
   predicts a delay time in a case where the first movable object avoids the conflict, and
   changes the movement plan of the first movable object in a case where the predicted delay time exceeds the allowable delay time.
(7) The information processing apparatus according to any one of (1) to (6), in which
   the control unit determines whether or not a conflict will occur between the first movable object in motion and the second movable object in motion.
(8) The information processing apparatus according to (7), in which
   the control unit
   predicts a delay time in a case where the first movable object avoids the conflict, and
   instructs the second movable object in motion to avoid the conflict in a case where the predicted delay time exceeds the allowable delay time.
(9) The information processing apparatus according to any one of (1) to (8), in which
   at least one of the first movable object or the second movable object is a flying object.
(10) The information processing apparatus according to any one of (1) to (9), in which
   the information processing apparatus is a server.
(11) An information processing apparatus, including
   a control unit that
   acquires a movement plan of each of a plurality of movable objects,
   predicts a delay time in a case of avoiding a conflict between the plurality of movable objects with respect to each of the plurality of movable objects,
   determines, with respect to each of the plurality of movable objects, whether or not the predicted delay time of which is shorter than an allowable delay time, and
   determines a priority order for avoiding the conflict so as to give priority to the movable object the predicted delay time of which is equal to or longer than the allowable delay time over the movable object the predicted delay time of which is shorter than the allowable delay time.
(12) An information processing method, including:
   by the information processing apparatus,
   predicting a movement path of a first movable object on the basis of a movement plan for which an allowable delay time is set; and
   determining whether or not a conflict will occur between the predicted movement path and a movement path of a second movable object.
(13) A program that causes an information processing apparatus to execute:
   a step of predicting a movement path of a first movable object on the basis of a movement plan for which an allowable delay time is set; and
   a step of determining whether or not a conflict will occur between the predicted movement path and a movement path of a second movable object.

### Reference Signs List

- 1: information processing system
- 10: radar
- 20: information processing apparatus
- 30: external information apparatus
- 40: operation apparatus
- 50, 60: drone aircraft

## Claims

1. An information processing apparatus, comprising
a control unit that
predicts a movement path of a first movable object on a basis of a movement plan for which an allowable delay time is set, and
determines whether or not a conflict will occur between the predicted movement path and a movement path of a second movable object.

2. The information processing apparatus according to claim 1, wherein
the movement path of the second movable object is a movement path predicted on a basis of the movement plan of the second movable object.

3. The information processing apparatus according to claim 2, wherein
the second movement plan includes information about an allowable delay time set for the second movable object.

4. The information processing apparatus according to claim 1, wherein
the control unit determines a movable object that avoids the conflict on a basis of a registration order when the movement plans of the first and second movable objects have been registered in the information processing apparatus and the allowable delay time, and instructs the determined movable object to avoid the conflict.

5. The information processing apparatus according to claim 1, wherein
the control unit determines whether or not the allowable delay time is feasible with respect to the first movable object on a basis of a remaining amount of power of the first movable object.

6. The information processing apparatus according to claim 4, wherein
the control unit
predicts a delay time in a case where the first movable object avoids the conflict, and
changes the movement plan in a case where the predicted delay time exceeds the allowable delay time.

7. The information processing apparatus according to claim 1, wherein
the control unit determines whether or not a conflict will occur between the first movable object in motion and the second movable object in motion.

8. The information processing apparatus according to claim 7, wherein
the control unit
predicts a delay time in a case where the first movable object avoids the conflict, and
instructs the second movable object in motion to avoid the conflict in a case where the predicted delay time exceeds the allowable delay time.

9. The information processing apparatus according to claim 1, wherein
at least one of the first movable object or the second movable object is a flying object.

10. The information processing apparatus according to claim 1, wherein
the information processing apparatus is a server.

11. An information processing apparatus, comprising
a control unit that
acquires a movement plan of each of a plurality of movable objects,
predicts a delay time in a case of avoiding a conflict between the plurality of movable objects with respect to each of the plurality of movable objects,
determines, with respect to each of the plurality of movable objects, whether or not the predicted delay time of which is shorter than an allowable delay time, and
determines a priority order for avoiding the conflict so as to give priority to the movable object the predicted delay time of which is equal to or longer than the allowable delay time over the movable object the predicted delay time of which is shorter than the allowable delay time.

12. An information processing method, comprising:
by the information processing apparatus,
predicting a movement path of a first movable object on a basis of a movement plan for which an allowable delay time is set; and
determining whether or not a conflict will occur between the predicted movement path and a movement path of a second movable object.

13. A program that causes an information processing apparatus to execute:
a step of predicting a movement path of a first movable object on a basis of a movement plan for which an allowable delay time is set; and
a step of determining whether or not a conflict will occur between the predicted movement path and a movement path of a second movable object.
